# EUROPEAN PATENT APPLICATION

(11) **EP 2 947 558 A1**
(43) Date of publication of application: **25.11.2015**
(21) Application number: 14740894.2
(22) Date of filing: 14.01.2014
(51) Int. Cl.: G06F 3/12

(54) **DATA TRANSMISSION SYSTEM AND DATA TRANSMISSION PROGRAM**

(30) Priority: 21.01.2013 JP 2013008067
(71) Applicant: Star Micronics Co., Ltd., Shizuoka-shi, Shizuoka 422-8654 (JP)
(72) Inventor: MORI, Yuji, Shizuoka-shi Shizuoka 422-8654 (JP)
(74) Representative: advotec.
(86) International application number: PCT/JP2014/050390
(87) International publication number: WO 2014/112451

(57) **Abstract**

Data generated by a web browser of a client terminal can be transmitted to a peripheral device without making a peripheral device conforming to an HTTP protocol, for example, by providing an HTTP server. Print data conforming to an HTTP protocol generated by a web browser 207a of the client terminal 200 are converted to print data conforming to a communication standard protocol of a printer 300, and the protocol-converted print data are transmitted from the client terminal 200 to the printer 300, by a web service 207b installed in the client terminal 200. Accordingly, the print data generated by the web service 207b can be transmitted to the printer 300 for printing the print data, without providing the printer 300 with an HTTP server.

## Description

### Technical Field

The present invention generally relates to a data transmission system and a data transmission program. In particular, the present invention is suitable to be used for a system that transmits data generated by a web browser of a client terminal to a peripheral device.

### Description of the Related Art

Currently, native applications and web applications are present. The native applications are installed in and used by client terminals, and the web applications are stored in a web server and used by being timely downloaded from the web server by each client terminal.

When an application program is updated, the application program of each client terminal should be updated for the native application, but only the application program within the web server may be updated for the web application. Therefore, the web applications are superior to the native applications at maintainability such as program maintenance, so they are increasingly used in recent years.

When the web application is used, a result of executing the application program is displayed by using a web browser that has been installed in the client terminal. Further, the web application can incorporate various scripts, for example scripts for print control.

A printing system using the web application is constituted by a web server, a client terminal, and a printer. The client terminal displays the execution result of the web application in a web browser. In this case, when a user presses a print button displayed on the web browser, a printing instruction is executed. Accordingly, the scripts for print control are executed such that print data can be generated in the client terminal and the generated print data can be transmitted to the printer.

Alternatively, when the user presses the print button displayed on the web browser, the client terminal may transmit the printing instruction to the web server such that the web server can generate the print data and transmit the print data to the printer (for example, see document 1).

Here, regardless of whether the print data are transmitted from the client terminal to the printer or are transmitted from the web server to the printer, when the web application transmits the print data to the printer, it is necessary to send the print data to the printer in a format according to the HTTP protocol by the constraints that the web application should operate on a general-purpose web browser.

When the print data are transmitted to the printer in the HTTP protocol format, the printer should be designed to be capable of receiving the print data in the HTTP protocol format, for example, by providing the printer with the HTTP server. However, the cost can be increased by providing the printer with the HTTP server. Furthermore, since the user cannot use the printer with which the HTTP server is not provided, the user would be forced to change the current printing system (for example, to introduce a new HTTP support printer). However, this is not preferable for the user.

The above problems are not limited to the printing system constituted by the web server, the client terminal, and the printer. That is, in a web system using a peripheral device (for example, a display device, a bar code reader, or a keyboard, etc.) other than the printer, when data generated by the client terminal or the web server having received an instruction from the client terminal are transmitted to the peripheral device in the HTTP protocol format, the similar problems occur.

### Prior Technology Document

### Patent Document

Document 1: Japanese Patent Application Publication No. 2009-274350

### Disclosure

### Technical Problem

The present invention is purposed to transmit data generated by a web browser of a client terminal to a peripheral device without making a peripheral device an HTTP support device, for example, by providing an HTTP server.

### Technical Solution

To solve the above problem, in the present invention, a web service installed in a client terminal converts data conforming to HTTP protocol generated by a web browser of the client terminal into data conforming to a communication standard protocol of a peripheral device, and the client terminal transmits the protocol-converted data to the peripheral device.

### Advantageous Effects

According to the present invention, since the peripheral device can receive the data conforming to its communication standard protocol from the client terminal, it is unnecessary to make the peripheral device an HTTP support device, for example, by providing the HTTP server. Therefore, the data generated by the web browser of the client terminal can be transmitted to the peripheral device without providing the peripheral device with the HTTP server.

As a result, a data transmission system using the web browser can be constituted without providing the peripheral device with the HTTP server. Furthermore, when a data transmission system using a peripheral device having no HTTP server is used, it can be changed to the data transmission system using the web browser by installing the web service in the client terminal.

### Brief Description of the Drawings

FIG. 1 is a schematic diagram exemplifying a printing system corresponding to a data transmission system according to an embodiment of the present invention.
FIG. 2 is a block diagram exemplifying a printing system according to an embodiment of the present invention.
FIG. 3 is a block diagram exemplifying a functional structure of a printing system according to an embodiment of the present invention.
FIG. 4 is a schematic diagram exemplifying a printing system corresponding to a modified example of a data transmission system according to an embodiment of the present invention.
FIG. 5 is a block diagram exemplifying a printing system according to a modified embodiment of the present invention.
FIG. 6 is a block diagram exemplifying a functional structure of a printing system according to a modified embodiment of the present invention.

### Mode for Invention

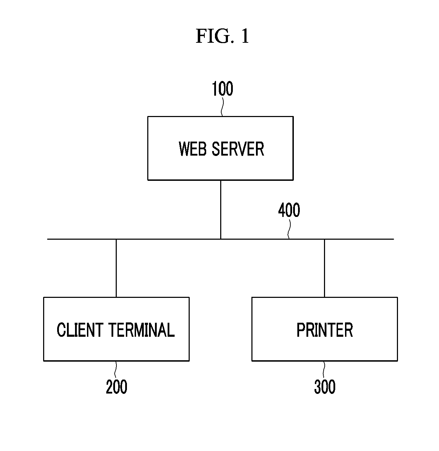

An embodiment of the present invention is described with reference to the drawings. FIG. 1 is a schematic diagram exemplifying a printing system corresponding to a data transmission system according to an embodiment of the present invention. As shown in FIG. 1, a printing system according to the embodiment of the present invention includes a web server 100, a client terminal 200, and a printer 300. The web server 100, the client terminal 200, and the printer 300 are connected to each other via a communication network. In one embodiment, the communication network may include a wireless local area network (LAN) 400.

In the printing system of the present embodiment, the web server 100 includes a web application and the client terminal 200 includes a web browser. Therefore, execution results of the web application can be displayed in the web browser and print data can be generated by the web browser based on the displayed data. Furthermore, the print data are transmitted from the client terminal 200 to the printer 300. The data transmission system of the present embodiment is constituted by the client terminal 200 and the printer 300 relating to the transmission of the print data.

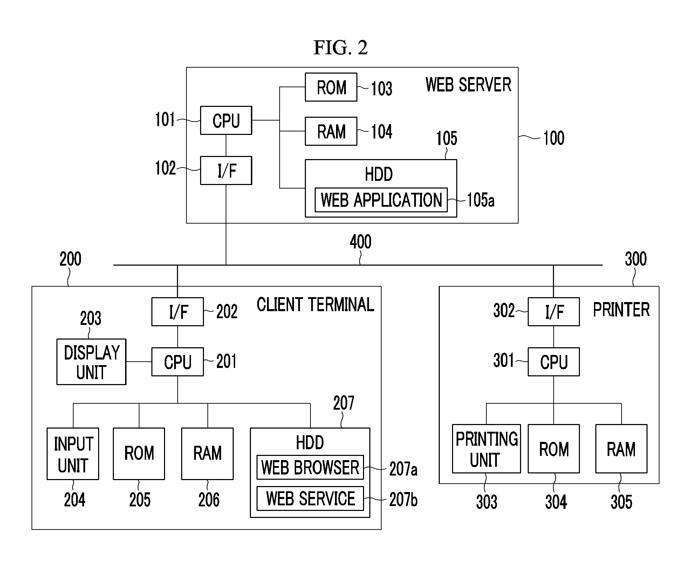

FIG. 2 is a block diagram exemplifying a printing system according to an embodiment of the present invention. As shown in FIG. 2, the web server 100, as its hardware structure, includes a central processing unit (CPU) 101, an interface 102, a ROM (Read Only Memory) 103, a RAM (Random Access Memory) 104, and a hard disk 105. The hard disk 105 stores a web application 105a.

The client terminal 200, as its hardware structure, includes a CPU 201, an interface 202, a display unit 203 such as a liquid crystal display, an input unit 204 such as a touch panel, a ROM 205, a RAM 206, and a storage unit 207. The hard disk 207 stores a web browser 207a and a web service 207b.

The printer 300, as its hardware structure, includes a CPU 301, an interface 302, a printing unit 303, a ROM 304, and a RAM 305.

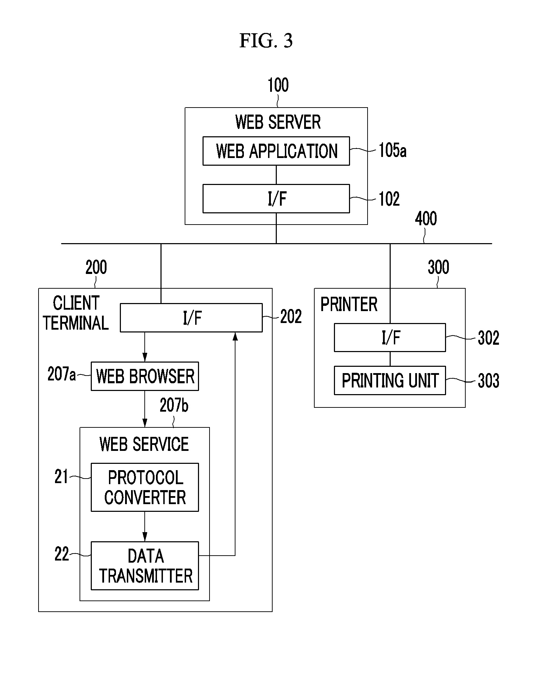

FIG. 3 is a block diagram exemplifying a functional structure of a printing system according to an embodiment of the present invention. In FIG. 3, only a main functional structure of the client terminal 200 according to an operation of the present embodiment is shown. For the web server 100 and the printer 300, a part of the hardware structure shown in FIG. 2 is shown.

As shown in FIG. 3, the client terminal 200, as its functional structure of the web service 207b, includes a protocol converter 21 and a data transmitter 22. The web service 207b is a native application that is installed in the hard disk 207 of the client terminal 200, and corresponds to a data transmission program of the present embodiment. The functions of the protocol converter 21 and the data transmitter 22 may be realized by an operation of the web service 207b (the data transmission program) under control of the CPU 201. In some embodiments, the functions of the protocol converter 21 and the data transmitter 22 may correspond to a protocol converting module and a data transmitting module of the data transmission program stored in the recording medium.

The web browser 207a performs a communication with the web application 105a of the web server 100, and displays an execution result of the web application 105a. Here, if a print button displayed on the web browser 207a is pressed by a user, the web browser 207a generates the print data in accordance with an HTTP (hypertext transfer protocol) protocol based on the displayed data.

The protocol converter 21 converts the print data conforming to the HTTP protocol which is generated by the web browser 207a into print data conforming to a communication standard protocol of the printer 300. The data transmitter 22 transmits to the printer 300 the protocol-converted print data via the LAN 400.

The printer 300 receives the protocol-converted print data transmitted from the client terminal 200, and the printing unit 303 of the printer 300 executes printing. Since the printer 300 can receive the print data conforming to its communication standard protocol from the client terminal 200, there is no need to be compatible with the HTTP protocol, for example, by providing the HTTP server.

As described above in detail, in the present embodiment, the web service 207b installed in the client terminal 200 converts the print data conforming to the HTTP protocol generated by the web browser 207a of the client terminal 200 into the print data conforming to the communication standard protocol of the printer 300, and the protocol-converted print data are transmitted from the client terminal 200 to the printer 300 via the LAN 400.

According to the above embodiment, the data transmission system using the web browser 207a can be constituted without providing the printer 300 with the HTTP server. In addition, when the data transmission system using the printer 300 having no HTTP server has been already used, it can be changed to the data transmission system using the web browser 207a by simply installing the web service 207b in the client terminal 200.

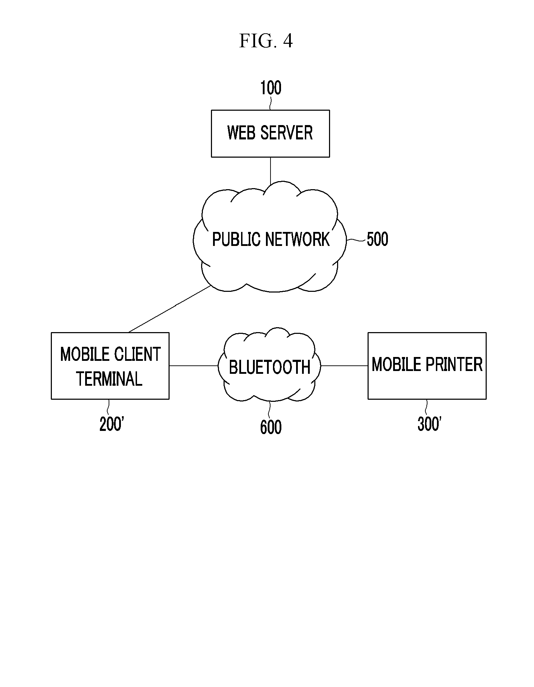

Furthermore, while it has been described as an example in the above embodiment that the web server 100, the client terminal 200, and the printer 300 are connected to each other via the LAN 400, the present invention is not limited thereto. For example, the web server 100 and the client terminal 200 may be connected via the LAN 400, and the client terminal 200 and the printer 300 may be connected via a short-range wireless communication network such as Bluetooth™. Alternatively, an embodiment shown in FIG. 4 may be used.

FIG. 4 is a schematic diagram exemplifying a printing system corresponding to a modified example of a data transmission system according to an embodiment of the present invention. As shown in FIG. 4, a printing system according to a modified embodiment of the present invention includes the web server 100, a mobile client terminal 200', and a mobile printer 300'.

The web server 100 and the mobile client terminal 200' are connected via a wide area network 500 such as a public network (for example, an IP network). The mobile client terminal 200' and the mobile printer 300' are connected via a narrow area network 600 using a short-range wireless communication network such as Bluetooth™.

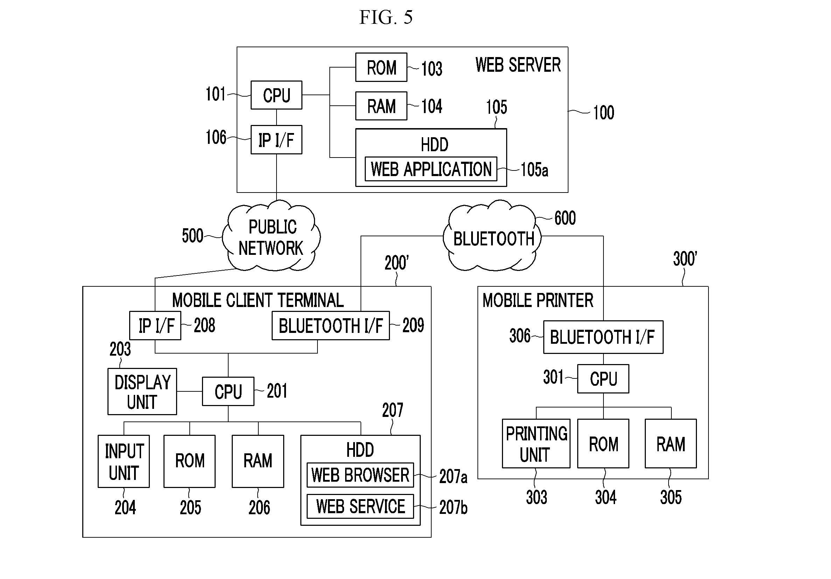

FIG. 5 is a block diagram exemplifying a printing system according to a modified embodiment of the present invention. In FIG 5, since blocks denoted by the same reference numbers as shown in FIG. 2 have the same functions as blocks of FIG. 2, a duplicated description is omitted.

As shown in FIG. 5, the web server 100 includes an IP interface 106 instead of the interface 102 shown in FIG. 2. The mobile client terminal 200' includes an IP interface 208 and a Bluetooth interface 209 instead of the interface 202 shown in FIG. 2. The mobile printer 300' includes a Bluetooth interface 306 instead of the interface 302 shown in FIG. 2.

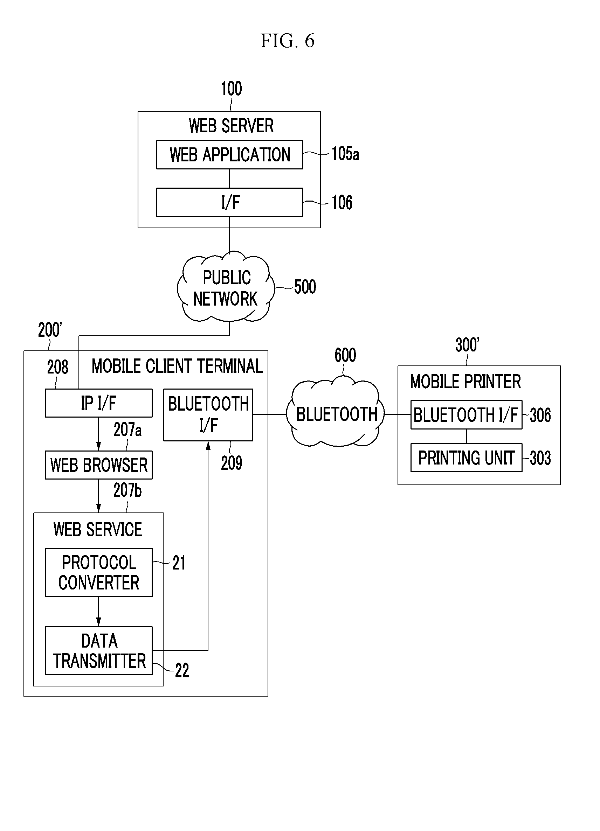

FIG. 6 is a block diagram exemplifying a functional structure of a printing system according to a modified embodiment of the present invention. As shown in FIG. 6, functional blocks provided by the web service 207b installed in the hard disk 207 of the mobile client terminal 200' are similar to the protocol converter 21 and the data transmitter 22 shown in FIG. 3.

In recent years, mobile-type client terminals (for example, the mobile client terminals 200') including smart phones have been widespread. In addition, regarding printers, portable mobile printers 300' have been widespread. In business for performing the printing process without being bound to a location (for example, business for reading a gas, water, or electricity meter), a printing system using the portable mobile client terminal 200' and the portable mobile printer 300' is particularly preferred.

However, as described in the above related art, if a printer is provided with an HTTP server and a client terminal transmits to the printer print data according to the HTTP protocol, it is required to connect the client terminal and the printer via an HTTP network (for example, a LAN). Since the printing is performed without being bound to a fixed place in the above-described business using the mobile client terminal and the mobile printer, the printing may be performed at a place where the HTTP network is unavailable. Therefore, it is not preferable to provide the HTTP server to the printer in the above-described business. Furthermore, since the printing may be performed at the place where the HTTP network is unavailable in the above-identified business, it is not preferable that the web server generates the print data and transmits the generated print data to the printer.

In contrast, according to the printing system shown in FIG. 4, FIG. 5, and FIG. 6, the inexpensive mobile printer 300' having no interface (for example, HTTP server) for the HTTP network connection can exchange the print data with the mobile client terminal 200' using the web browser 207a by the short-range wireless communication. Accordingly, the printing system using the web application can be constituted in the business in which it is preferable to use the mobile client terminals and the mobile printers.

While it has been exemplified in the above embodiment that the mobile client terminal 200' and the mobile printer 300' are connected by the Bluetooth, the present invention is not limited thereto. In some embodiments, the mobile client terminal 200' and the mobile printer 300' may be connected by a narrow area network such as a wireless LAN, a USB (Universal Serial Bus), a parallel communication, or a serial communication.

Further, while it has been exemplified in the above embodiment that the printer 300 or the mobile printer 300' is used as an example of a peripheral device, the present invention is not limited thereto. In some embodiments, a display device, a bar code reader, a keyboard, or a network device may be used instead of the printer 300 or the mobile printer 300'.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

### Description of Reference Numbers

- 21: Protocol converter
- 22: Data transmitter
- 100: Web server
- 200: Client terminal
- 200': Mobile client terminal
- 300: Printer
- 300': Mobile printer
- 105a: Web application
- 207a: Web browser
- 207b: Web service

## Claims

1. A data transmission system comprising a client terminal and a peripheral device adapted to transmit data generated by a web browser of the client terminal to the peripheral device,
wherein the client terminal comprises:
the web browser configured to generate data conforming to an HTTP protocol;
a protocol converter configured to convert the data conforming to the HTTP protocol generated by the web browser into data conforming to a communication standard protocol of the peripheral device; and
a data transmitter configured to transmit the protocol-converted data to the peripheral device.

2. The data transmission system of claim 1, wherein the client terminal having the web browser is connected via a wide area network to a web server having a web application for performing a communication with the web browser, and
wherein the client terminal is connected to the peripheral device via a narrow area network.

3. The data transmission system of claim 2, wherein the wide area network comprises a public network, and the narrow area network comprises a short-range wireless communication network.

4. The data transmission system of claim 3, wherein the client terminal is a portable client terminal of mobile type, and the peripheral device is a portable peripheral device of mobile type.

5. A data transmission program configured to be installed in a client terminal to transmit data generated by a web browser of the client terminal to a peripheral device in a data transmission system comprising the client terminal and the peripheral device, the data transmission program comprising:
protocol converting means configured to convert data conforming to an HTTP protocol generated by the web browser into data conforming to a communication standard protocol of the peripheral device; and
data transmitting means configured to transmit the protocol-converted data to the peripheral device.
